# EUROPÄISCHE PATENTSCHRIFT

(11) **EP 4 338 936 B1**
(45) Veröffentlichungstag und Bekanntmachung des Hinweises auf die Patenterteilung: **11.06.2025**
(21) Anmeldenummer: 22195785.5
(22) Anmeldetag: 15.09.2022
(51) Int. Cl.: B29C 64/124, B29C 64/129, B29C 64/264, B29C 64/393, B33Y 10/00, B33Y 30/00, B33Y 50/00

(54) **3D-DRUCKVERFAHREN**
3D-PRINTING METHOD
PROCÉDÉ D'IMPRESSION 3D

(43) Veröffentlichungstag der Anmeldung: 20.03.2024
(73) Patentinhaber: In-Vision Technologies AG, 2353 Guntramsdorf (AT)
(72) Erfinder: Jahr, Wiebke, 1230 Wien (AT)
(74) Vertreter: Patentanwaltskanzlei Matschnig & Forsthuber OG

(56) Entgegenhaltungen:
- WO-A1-2020/232083
- WO-A1-2022/171704

## Beschreibung

Die Erfindung betrifft ein volumetrisches 3D-Druckverfahren zur Herstellung eines dreidimensionalen Objekts ausgehend von einem dreidimensionalen Vorlagen-Objekt, welches aus einem virtuellen Objekt-Material gebildet ist, wobei das Verfahren folgende Schritte umfasst:
a) Bereitstellen
   - von zumindest einem Speicher, wobei in dem zumindest einen Speicher Projektions-Bilder des Vorlagen-Objektes gespeichert sind, wobei die Projektions-Bilder zweidimensionale Lichtverteilungen aus Pixeln, beispielsweise in Zeilen und Spalten, sind, welche Projektions-Bilder Projektionen des Vorlagen-Objekts in jeweils verschiedenen Projektionsrichtungen um eine festgelegte Objekt-Achse entsprechen, wobei die Projektionsrichtungen der Projektions-Bilder orthogonal zu der festgelegten Objekt-Achse verlaufen,
      wobei die Helligkeit eines Pixels eines Projektions-Bildes mit dem aufsummierten virtuellen Objekt-Material des Vorlagen-Objekts, ausgehend von dem Pixel, entlang der Projektionsrichtung des entsprechenden Projektions-Bildes derart korrespondiert, dass die Helligkeit eines Pixels proportional zu dessen aufsummierten virtuellen Objekt-Materials ist,
   - von zumindest einer Projektionsvorrichtung, welche dazu eingerichtet ist, die Projektions-Bilder des Vorlagen-Objekts in Richtung einer Abstrahlrichtung der zumindest einen Projektionsvorrichtung vor die zumindest eine Projektionsvorrichtung in einem festgelegten Schärfentiefenbereich um eine Brennebene scharf abzubilden, und
   - eines Behälters, welcher eine fotosensitive Substanz beinhaltet, wobei die fotosensitive Substanz eingerichtet ist, in Bereichen, in welchen ein Lichtintensitäts-Schwellenwert überschritten wird, auszuhärten,
b) Abbilden der Projektions-Bilder mittels der zumindest einen Projektionsvorrichtung in die in dem Behälter befindliche fotosensitive Substanz, sodass der Lichtintensitäts-Schwellenwert der lichtsensitiven Substanz in den Bereichen überschritten wird, welche den herzustellenden dreidimensionalen Objekt entsprechen, wobei die einzelnen Projektions-Bilder jeweils in unterschiedlichen Winkelpositionen um eine festgelegte Behälter-Achse in die fotosensitive Substanz abgebildet werden, wobei die Abstrahlrichtung der Projektionsvorrichtung in einer Winkelposition der Projektionsrichtung des in der Winkelposition abgebildeten Projektions-Bildes des Vorlagen-Objekts entspricht,
c) Herausnahme des ausgehärteten herzustellenden dreidimensionalen Objekts aus dem Behälter.

Ein solches Verfahren ist aus WO2020/232083 A1 bekannt. Bei volumetrischen 3D-Druckverfahren aus dem Stand der Technik ist die Größe bzw.

Ausdehnung des herzustellenden dreidimensionalen Objekts limitiert durch den Schärfentiefenbereich der Projektionsvorrichtungen, da die Lichtintensität, mit welcher die Projektions-Bilder abgebildet werden, ausreichend hoch sein muss, was sich jedoch nur bei einer eher großen Blendenöffnung - und daraus resultierenden schmalen Schärfentiefenbereich - erzielen lässt.

Die Blende der zumindest einen Projektionsvorrichtung ist im Stand der Technik daher meist fest vorgegeben und ist einem Zusammenspiel von Lichtstärke der Lichtquelle der Projektionsvorrichtung und der gewünschten Schärfentiefe bzw. Tiefenschärfe geschuldet.

Aufgrund der fest vorgegebenen Blende ist auch der Schärfentiefenbereich fest vorgegeben und naturgemäß begrenzt.

Der Schärfentiefenbereich hängt quadratisch von der Größe der Pixel ab, wobei
Größenordnungen von 100 mm bei 100 µm Pixelgröße, 1 mm bei 10 µm Pixelgröße und 10 µm bei 1 µm Pixelgröße typisch sind, d.h. dass je präziser man drucken möchte (also kleinere Pixel haben möchte), desto mehr schlägt die limitierende Tiefenschärfe zubuche und verhindert die Herstellung eines größeren Objektes.

Daraus ergibt sich, dass mit üblichen Verfahren aus dem Stand der Technik das herzustellende Objekt zwangsweise eine maximale Größe bzw. Ausdehnung von üblicherweise wenige 10 mm aufweisen kann, je nach Implementierung bis zur einfachen oder doppelten Schärfentiefe.

Es ist daher eine Aufgabe der vorliegenden Erfindung ein Verfahren bereitzustellen, welches die Nachteile des Standes der Technik beseitigt und ermöglicht, größere Objekte herzustellen.

Diese Aufgabe wird dadurch gelöst, dass in Schritt b) wenn in einer Winkelposition die Ausdehnung des herzustellenden dreidimensionalen Objekts entlang der Abstrahlrichtung der zumindest einen Projektionsvorrichtung in dieser Winkelposition zumindest um das doppelte größer ist als der festgelegte Schärfentiefenbereich, die Brennebene derart relativ zum Behälter verschoben wird, sodass zumindest die Hälfte der Ausdehnung des herzustellenden dreidimensionalen Objekts entlang der jeweiligen Abstrahlrichtung in der jeweiligen Winkelposition durch den Schärfentiefenbereich abgedeckt wird.

Es sei angemerkt, dass beim Abbilden der Projektions-Bilder auch die Lichtintensität proportional mit dem aufsummierten virtuellen Objekt-Material ist, sodass jene Stellen, welche im Vergleich zu anderen eine größere Summe von virtuellen Objekt-Material aufweisen, eine höhere Lichtintensität beim Abbilden aufweisen.

Die Projektions-Bilder können vorzugsweise durch eine Radontransformation erhalten werden.

Es sei festgehalten, dass falls nicht genug Energie in Form von Lichtintensität in die lichtsensitive Substanz gelangt ist, um das herzustellende dreidimensionale Objekt ausreichend auszuhärten, dann kann optional ein Wiederholen des Schritts b) vorgesehen sein bis das herzustellende Objekt in der lichtsensitiven Substanz ausgehärtet ist.

Es kann vorgesehen sein, dass die lichtsensitive Substanz ein lichtsensitives Harz ist, beispielsweise aus einem Fotopolymer und einem Fotoinitiator. Bei dem Fotopolymer kann beispielsweise Gelatine-Methacrylat (gelMA), gelöst in Phosphatgepufferte Kochsalzlösung (PBS); Bisphenol-A-Glycerolat-Diacrylat (BPAGDA); Poly(ethylenglykol)diacrylat (PEGDA) oder Pentaerythritol-Tetraacrylat (PETA) verwendet werden.Als Fotoinitiator kann beispielsweise Lithiumphenyl-2,4,6-trimethylbenzoyl-phosphinat (LAP); Campherchinon (CQ), mit Co-Initiator Ethyl-4-dimethylaminobenzoat (EDAB); Tris(2,2-bipyridyl)dichlororuthenium(II) hexahydrat (Ru) und Natriumpersulfat (SPS); 3,4-Epoxycyclohexylmethyl 3,4-Epoxycyclohexancarboxylat (EEC); Phenylbis(2,4,6-trimethylbenzoyl)phosphinoxid oder Bis(η5-2,4-cylcopentadien-1-yl)-bis(2,6-difluor-3-(1H-pyrrol-1-yl)-phenyl)titan (Markenname: Irgacure 784, BASF) verwendet werden.

Es kann vorgesehen sein, dass genau eine Projektionsvorrichtung in Schritt a) bereitgestellt wird.

Es kann vorgesehen sein, dass zum Abbilden der Projektions-Bilder durch die zumindest eine Projektionsvorrichtung in den jeweiligen Winkelpositionen der Behälter um die Behälter-Achse gedreht wird.

Es kann vorgesehen sein, dass zum Abbilden der Projektions-Bilder durch die zumindest eine Projektionsvorrichtung in den jeweiligen Winkelpositionen die zumindest eine Projektionsvorrichtung um die Behälter-Achse gedreht wird.

Es kann vorgesehen sein, dass das Verschieben der Brennebene in den jeweiligen Winkelpositionen durch Bewegen des Behälters relativ zu der zumindest einen Projektionsvorrichtung erfolgt, insbesondere linear bewegt wird entlang der Abstrahlrichtung der zumindest einen Projektionsvorrichtung.

Es kann vorgesehen sein, dass das Verschieben der Brennebene in den jeweiligen Winkelpositionen durch Bewegen der zumindest einen Projektionsvorrichtung relativ zu dem Behälter erfolgt, insbesondere linear bewegt wird entlang der Abstrahlrichtung der zumindest einen Projektionsvorrichtung.

Es kann vorgesehen sein, dass das Verschieben der Brennebene in den jeweiligen Winkelpositionen durch Verstellen eines Fokus bzw. einer Brennweite der zumindest einen Projektionsvorrichtung erfolgt.

Es kann vorgesehen sein, dass das Verschieben der Brennebene durch eine spiralförmige Bewegung des Behälters und/oder der Projektionsvorrichtung erfolgt.

Es kann vorgesehen sein, dass die unterschiedlichen Winkelpositionen, in welchen die Projektions-Bilder abgebildet werden, zueinander von 0,5° bis 5° beabstandet sind.

Es kann vorgesehen sein, dass die Projektionsrichtungen der Projektions-Bilder um die festgelegte Objekt-Achse in definierten gleichen Abständen zueinander verlaufen, vorzugsweise in Abständen von 0,5° bis 5°, insbesondere 0,5°.

Es kann vorgesehen sein, dass in Schritt b) das Abbilden der Projektions-Bilder in den unterschiedlichen Projektionsrichtungen in den Behälter kontinuierlich oder schrittweise abläuft.

### Figurenbeschreibung

Nachfolgend wird die Erfindung anhand von beispielhaften Zeichnungen näher erläutert. Hierbei zeigt
- Fig. 1: eine perspektivische Ansicht eines Beispiels eines dreidimensionalen Vorlagen-Objekts, welches aus einem virtuellen Objektmaterial gebildet ist, wobei ausgehend von diesem Vorlagen-Objekt mittels eines volumetrischen 3D-Druckverfahrens ein dreidimensionales Objekt hergestellt werden soll,
- Fig. 2A: das Vorlagen-Objekt aus Fig. 1 in einer Ansicht von oben, wobei um eine Objekt-Achse herum in verschiedenen Projektionsrichtungen zweidimensionale Projektions-Bilder abgebildet sind, und Projektions-Bilder des Vorlagen-Objekts in der jeweiligen Projektionsrichtung repräsentieren,
- Fig. 2B: ein beispielhaftes Projektion-Bild mit beispielhaften Pixeln, wobei ausgehend von den jeweiligen Pixeln in Richtung der Projektionsrichtung des Projektions-Bildes das virtuelle Objekt-Material des Vorlagen-Objekts aufsummiert wird,
- Fig. 3A-3H: schematische Darstellungen eines Ablaufs eines volumetrischen 3D-Druckverfahrens, wobei die einzelnen Projektions-Bilder des Vorlagen-Objekts aus Fig. 2 in unterschiedlichen Winkelpositionen mittels einer Projektionsvorrichtung in einen Behälter abgebildet werden, wobei die Winkelpositionen den entsprechenden Projektionsrichtung der Projektions- Bilder entsprechen, und wobei im gezeigten Beispiel der Behälter relativ zur Projektionsvorrichtung gedreht wird,
- Fig. 4A-4C: eine schematische Darstellung eines Ablaufs einer relativen linearen Verschiebung der Projektionsvorrichtung zum Behälter, wobei durch die Verschiebung eine Brennebene und deren Schärfentiefenbereich der Projektionsvorrichtung im Behälter linear bewegt wird, wobei die lineare Verschiebung im gezeigten Beispiel während des Abbildens des Projektions-Bildes in Fig. 3A abläuft.

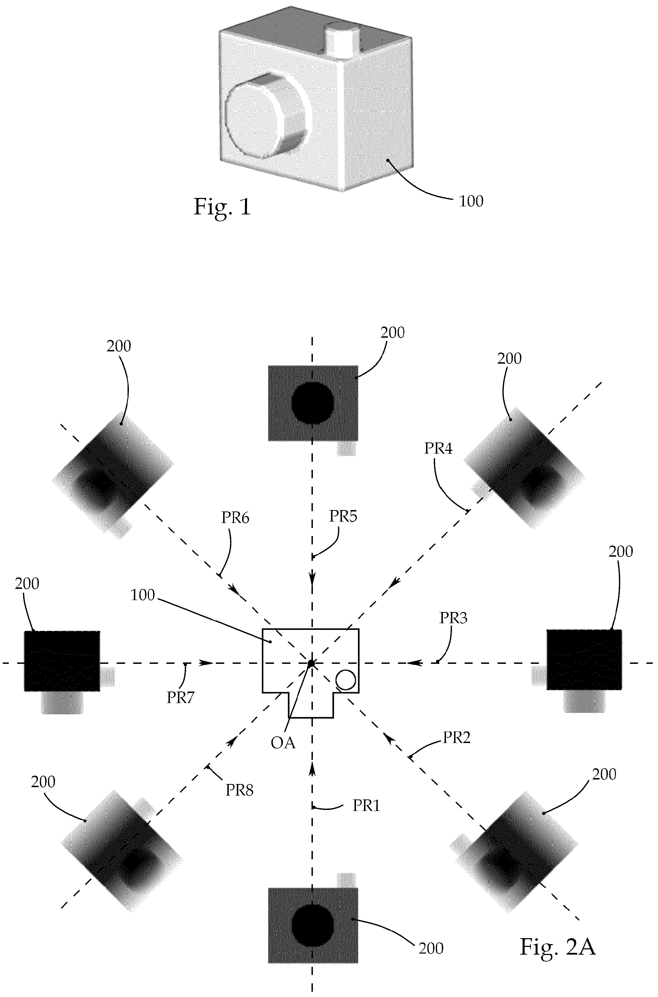

Die Figuren zeigen einen schematischen Ablauf eines volumetrischen 3D-Druckverfahrens zur Herstellung eines dreidimensionalen Objekts 50 ausgehend von einem dreidimensionalen Vorlagen-Objekt **100,** welches aus einem virtuellen Objekt-Material gebildet ist und in **Fig. 1** in einer perspektivischen Ansicht gezeigt ist.

Das Verfahren umfasst dabei in einem ersten Schritt a) das Bereitstellen von zumindest einem Speicher, wobei in dem zumindest einen Speicher Projektions-Bilder **200** des Vorlagen-Objektes **100** gespeichert sind.

Die Projektions-Bilder **200** sind zweidimensionale Lichtverteilungen aus Pixeln in Zeilen und Spalten, welche Projektions-Bilder **200** Projektionen des Vorlagen-Objekts **100** in jeweils verschiedenen Projektionsrichtungen **PR1 - PR8** um eine festgelegte Objekt-Achse **OA** entsprechen, wobei die Projektionsrichtungen **PR1 - PR8** der Projektions-Bilder **200** orthogonal zu der festgelegten Objekt-Achse **OA** verlaufen.

**Fig. 2A** zeigt hierzu das Vorlagen-Objekt **100** in einer Ansicht von oben, wobei um die festgelegte Objekt-Achse **OA** in gleichen Winkelabständen von 45° herum Projektions-Bilder **200** vorhanden sind. Der Winkelabstand zwischen den Projektionsrichtungen **PR1 - PR8** ist lediglich zur vereinfachten Darstellung im gezeigten Beispiel 45 ° und kann vorzugsweise auch 0,5° bis 5°, insbesondere 0,5°, sein.

Es sei angemerkt, dass die dargestellten Projektions-Bilder **200** in **Fig. 2A** eigentlich senkrecht zur Zeichenebene sind. Zur besseren Übersicht und Verständlichkeit wurde allerdings die vorliegende Darstellung gewählt.

Die Helligkeit eines Pixels eines Projektions-Bildes **200** korrespondiert dabei mit dem aufsummierten virtuellen Objekt-Material des Vorlagen-Objekts **100,** ausgehend von dem Pixel, entlang der Projektionsrichtung **PR1 - PR8** des entsprechenden Projektions-Bildes **200** derart, dass die Helligkeit eines Pixels proportional zu dessen aufsummierten virtuellen Objekt-Materials ist.

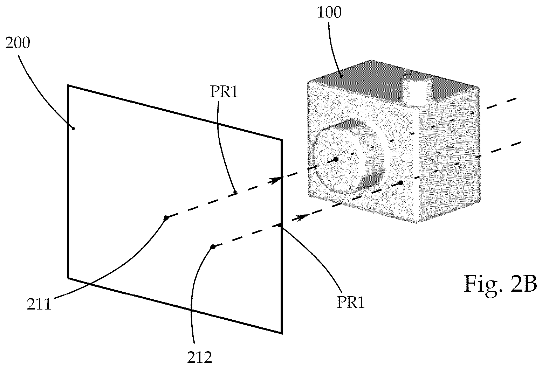

**Fig. 2B** zeigt hierzu ein beispielhaftes Projektions-Bild **200,** wobei zwei Pixel **211, 212** beispielhaft eingezeichnet sind. Das entsprechende Projektions-Bild und Projektionsrichtung sind auch in **Fig. 2A** eingezeichnet. Ausgehend von den jeweiligen Pixeln **211, 212** in Richtung der Projektionsrichtung **PR1** des Projektions-Bildes wird das virtuelle Objekt-Material aufsummiert, wie bereits geschildert. Im gezeigten Beispiel in **Fig. 2B** ist die Summe des virtuellen Objekt-Materials ausgehend von dem Pixel mit Bezugszeichen **211** größer als die Summe ausgehend von dem Pixel mit Bezugszeichen **212.** Der Pixel mit Bezugszeichen **211** ist daher im Projektions-Bild in den gezeigten Beispielen dunkler dargestellt als der Pixel mit Bezugszeichen **212.** Es sei angemerkt, dass die Darstellung auch umgekehrt erfolgen kann, d.h. dass jene Pixel mit höherer Summe des aufsummierten virtuellen Objekt-Materials heller sind als jene, deren Summe im Vergleich kleiner ist.

Als vorzugsweises Verfahren zur Erstellung der einzelnen Projektions-Bilder **200** kann auch die sogenannte Radon-Transformation verwendet werden.

Weiters ist im gezeigten Beispiel eine Projektionsvorrichtung **300** bereitgestellt, welche dazu eingerichtet ist, die Projektions-Bilder **200** des Vorlagen-Objekts **100** in Richtung einer Abstrahlrichtung **X** der zumindest einen Projektionsvorrichtung **300** vor die zumindest eine Projektionsvorrichtung **300** in einem festgelegten Schärfentiefenbereich **ST** um eine Brennebene **F** scharf abzubilden. Beim Abbilden der Projektions-Bilder **200** ist auch die Lichtintensität proportional mit dem aufsummierten virtuellen Objekt-Material, sodass jene Stellen bzw. Pixel, welche im Vergleich zu anderen eine größere Summe von virtuellen Objekt-Material aufweisen, eine höhere Lichtintensität beim Abbilden aufweisen. In Hinblick auf das gezeigte Beispiel in **Fig. 2B** weißt jener Pixel mit dem Bezugszeichen **211** eine höhere Lichtintensität auf als der Pixel mit dem Bezugszeichen **212.**

Ferner ist ein Behälter **400** bereitgestellt, welcher eine fotosensitive Substanz **410** beinhaltet, wobei die fotosensitive Substanz **410** eingerichtet ist, in Bereichen, in welchen ein Lichtintensitäts-Schwellenwert überschritten wird, auszuhärten. Dieser Lichtintensitäts-Schwellenwert wird aufgrund der Bestrahlung von Licht über einen bestimmten Zeitraum - abhängig von der Wahl der fotosensitiven Substanz - erreicht bzw. überschritten.

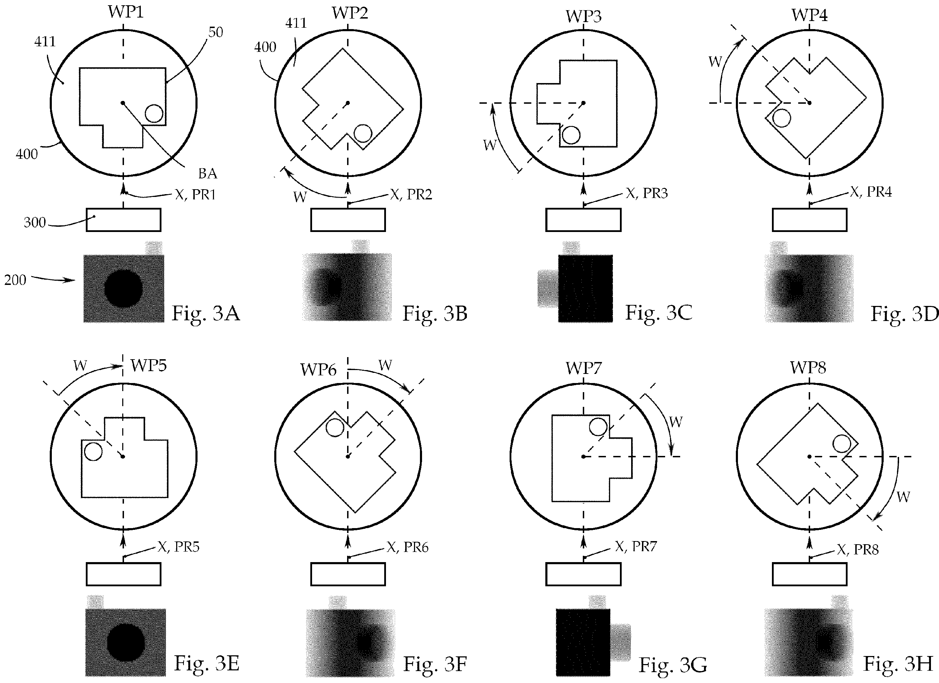

**Fig. 3A** bis **3H** zeigen einen Schritt b) des volumetrischen 3D-Druckverfahrens, wobei die **Figuren 3A** bis **3H** als Abfolge startend mit **Fig. 3A** zu sehen sind. Dabei werden in Schritt b) die Projektions-Bilder **200** mittels der Projektionsvorrichtung **300** in die in dem Behälter **400** befindliche fotosensitive Substanz **410** abgebildet, sodass der Lichtintensitäts-Schwellenwert der lichtsensitiven Substanz in den Bereichen überschritten wird, welche demherzustellenden dreidimensionalen Objekt **50** entsprechen.

Die einzelnen Projektions-Bilder **200** werden jeweils in unterschiedlichen Winkelpositionen **WP1** - **WP8** um eine festgelegte Behälter-Achse **BA** in die fotosensitive Substanz **410** abgebildet werden, wobei die Abstrahlrichtung **X** der zumindest einen Projektionsvorrichtung **300** in einer Winkelposition **WP1 - WP8** der Projektionsrichtung **PR1** - PR8 des in der Winkelposition **WP1 - WP8** abgebildeten Projektions-Bildes **200** des Vorlagen-Objekts **100** entspricht.

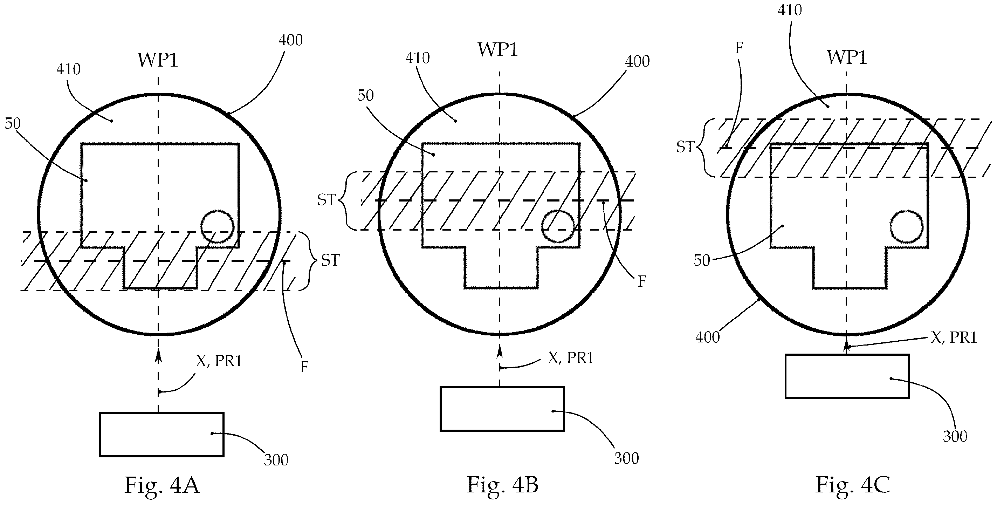

**Fig. 3A** bis **3H** sowie **Fig. 4A** bis **4C** zeigen einen vereinfachten schematischen Ablauf des erfindungsgemäßen volumetrischen 3D-Druckverfahrens zur Herstellung eines Objekts **50** ausgehend von dem virtuellen Vorlagen-Objekt **100** anhand eines Beispiels.

In den **Figuren 3A** bis **3H** ist jeweils der Behälter **400,** in welchen die lichtsensitive Substanz, beispielsweise ein Harz, angeordnet ist, gezeigt, wobei der Behälter **400** um eine Behälter-Achse **BA** drehbar ist. Ferners sind in den Figuren jeweils eine Projektionsvorrichtung **300** gezeigt, welche in Richtung einer Abstrahlrichtung **X** die unterschiedlichen Projektions-Bilder aus der vorherigen **Fig. 2A** abbildet. In **Fig. 3A** wird jenes Projektions-Bild **200** abgebildet, welcher mit der Projektionsrichtung **PR1** korrespondiert, wobei der Behälter **400** mit der darin befindlichen lichtsensitiven Substanz sich in einer ersten Winkelposition **WP1** relativ zur Projektionsvorrichtung **300** befindet.

In einem nächsten Schritt - ersichtlich in **Fig. 3B** - ist der Behälter **400** mitsamt dem Harz um die Behälter-Achse **BA** relativ zur Projektionsvorrichtung **300** um einen Winkel **W** gedreht und befindet sich einer zweiten Winkelposition **WP2** relativ zur Projektionsvorrichtung **300.**

In dieser Stellung des Behälters **400** bildet die Projektionsvorrichtung **300** das Projektions-Bild **200** in die lichtsensitive Substanz ab, welcher mit der Projektionsrichtung **PR2** korrespondiert.

Es sei angemerkt, dass in den **Figuren 3A** bis **3H** jeweils das herzustellende dreidimensionale Objekt **50** eingezeichnet ist, wobei dies lediglich als Anhaltspunkt dient, wie sich das jeweils abgebildete Projektions-Bild **200** zu dem herzustellenden dreidimensionalen Objekt **50** bezieht.

Dadurch soll auch verdeutlicht werden, dass die Abstrahlrichtung der Projektionsvorrichtung **300** in einer bestimmten Winkelposition **WP1 - WP8** der jeweiligen Projektionsrichtung **PR1 - PR8** des in der Winkelposition abgebildeten Projektions-Bildes **200** des Vorlagen-Objekts **100** entspricht.

Es sei ferner angemerkt, dass zum Abbilden der Projektions-Bilder **200** durch die Projektionsvorrichtung **300** in den jeweiligen Winkelpositionen **WP1 - WP8** auch die Projektionsvorrichtung **300** relativ zum Behälter **400** um die Behälter-Achse **BA** gedreht werden kann.

Ferner wird in Schritt b) wenn in einer Winkelposition **WP1 - WP8** die Ausdehnung des herzustellenden dreidimensionalen Objekts **50** entlang der Abstrahlrichtung **X** der Projektionsvorrichtung **300** in dieser Winkelposition **WP1 - WP8** zumindest um das doppelte größer ist als der festgelegte Schärfentiefenbereich **ST,** die Brennebene **F** derart relativ zum Behälter **400** verschoben, sodass zumindest die Hälfte der Ausdehnung des herzustellenden dreidimensionalen Objekts **50** entlang der jeweiligen Abstrahlrichtung **X** in der jeweiligen Winkelposition **WP1 - WP8** durch den Schärfentiefenbereich **ST** abgedeckt wird.

Die Hälfte der Ausdehnung in einer Winkelposition ist deshalb ausreichend, da bei einer um 180° gedrehten Winkelposition die "andere" Hälfte zur Aushärtung gebracht werden kann.

Exemplarisch ist in **Fig. 4A** bis **4C** ausgehend von der ersten Winkelposition **WP1** in **Fig.** 3A gezeigt, dass die Ausdehnung des herzustellenden dreidimensionalen Objekts **50** entlang der Abstrahlrichtung **X** der Projektionsvorrichtung **300** größer ist als der Schärfentiefenbereich **ST** der Brennebene **F.** In der Abfolge ausgehend von **Fig. 4A** bis zu **Fig. 4C** wird der Schärfentiefenbereich **ST** mittels einer linearen Relativverschiebung der Projektionsvorrichtung **300** entlang der Abstrahlrichtung **X** zum Behälter **400** verschoben, sodass der Schärfentiefenbereich **ST** die Ausdehnung des herzustellenden dreidimensionalen Objekts **50** in dieser ersten Winkelposition **WP1** vollständig abdeckt während das entsprechende Projektions-Bild **200,** welches mit der Projektionsrichtung **PR1** korrespondiert, in die lichtsensitive Substanz **410** abgebildet wird.

Es sei angemerkt, dass das Verschieben der Brennebene **F** in den jeweiligen Winkelpositionen **WP1 - WP8** auch durch Bewegen des Behälters **400** relativ zu der Projektionsvorrichtung **300** erfolgen kann, insbesondere linear bewegt wird entlang der Abstrahlrichtung **X** der Projektionsvorrichtung **300.**

Ebenfalls denkbar ist, dass das Verschieben der Brennebene **F** in den jeweiligen Winkelpositionen **WP1 - WP8** durch Verstellen eines Fokus bzw. der Brennweite der Projektionsvorrichtung **300** erfolgen kann.

Derselbe Vorgang des Verschiebens des Schärfentiefenbereichs **ST** wird in den weiteren Winkelpositionen **WP2** - **WP3,** welche in **Fig. 3B** bis **3H** dargestellt sind, ebenfalls durchgeführt.

Nach dem Abbilden des Projektions-Bildes **200** in **Fig. 3H** und dem zugehörigen Verschieben des Schärfentiefenbereichs **ST** - also einem kompletten Durchgang - sollte das dreidimensionale Objekt **50** ausgehärtet sein. Im Falle das dies nicht der Fall ist, kann der Durchgang, welcher in **Fig. 3A** bis **3H** (inkl. dem jeweiligen Verschieben des Schärfentiefenbereichs **ST)** gezeigt ist, beliebig oft wiederholt werden.

Sobald das dreidimensionale Objekt **50** ausgehärtet ist, kann dieses in einem abschließenden Schritt c) aus dem Behälter **400** entnommen werden.

### LISTE DER BEZUGSZEICHEN

| | |
|---|---|
| Dreidimensionales Objekt | 50 |
| Vorlagen-Objekt | 100 |
| Projektions-Bilder | 200 |
| Pixel | 211, 212 |
| Projektionsvorrichtung | 300 |
| Behälter | 400 |
| Lichtsensitive Substanz | 410 |
| Objekt-Achse | OA |
| Behälter-Achse | BA |
| Brennebene | F |
| Schärfentiefenbereich | ST |
| Winkel | W |
| Winkelposition | WP1-WP8 |
| Projektionsrichtung | PR1-PR8 |
| Abstrahlrichtung | X |

## Patentansprüche

1. Volumetrisches 3D-Druckverfahren zur Herstellung eines dreidimensionalen Objekts (50) ausgehend von einem dreidimensionalen Vorlagen-Objekt (100), welches aus einem virtuellen Objekt-Material gebildet ist, wobei das Verfahren folgende Schritte umfasst:
a) Bereitstellen
- von zumindest einem Speicher, wobei in dem zumindest einen Speicher Projektions-Bilder (200) des Vorlagen-Objektes (100) gespeichert sind, wobei die Projektions-Bilder (200) zweidimensionale Lichtverteilungen aus Pixeln sind, beispielsweise in Zeilen und Spalten, welche Projektions-Bilder (200) Projektionen des Vorlagen-Objekts (100) in jeweils verschiedenen Projektionsrichtungen (PR1 - PR8) um eine festgelegte Objekt-Achse (OA) entsprechen, wobei die Projektionsrichtungen (PR1 - PR8) der Projektions-Bilder (200) orthogonal zu der festgelegten Objekt-Achse (OA) verlaufen,
wobei die Helligkeit eines Pixels eines Projektions-Bildes (200) mit dem aufsummierten virtuellen Objekt-Material des Vorlagen-Objekts (100), ausgehend von dem Pixel, entlang der Projektionsrichtung (PR1 - PR8) des entsprechenden Projektions-Bildes (200) derart korrespondiert, dass die Helligkeit eines Pixels proportional zu dessen aufsummierten virtuellen Objekt-Material ist,
- von zumindest einer Projektionsvorrichtung (300), welche dazu eingerichtet ist, die Projektions-Bilder (200) des Vorlagen-Objekts (100) in Richtung einer Abstrahlrichtung (X) der zumindest einen Projektionsvorrichtung (300) vor die zumindest eine Projektionsvorrichtung (300) in einem festgelegten Schärfentiefenbereich (ST) um eine Brennebene (F) scharf abzubilden, und
- eines Behälters (400), welcher eine fotosensitive Substanz (410) beinhaltet, wobei die fotosensitive Substanz (410) eingerichtet ist, in Bereichen, in welchen ein Lichtintensitäts-Schwellenwert überschritten wird, auszuhärten,
b) Abbilden der Projektions-Bilder (200) mittels der zumindest einen Projektionsvorrichtung (300) in die in dem Behälter (400) befindliche fotosensitive Substanz (410), sodass der Lichtintensitäts-Schwellenwert der lichtsensitiven Substanz in den Bereichen überschritten wird, welchen den herzustellenden dreidimensionalen Objekt entsprechen, wobei die einzelnen Projektions-Bilder (200) jeweils in unterschiedlichen Winkelpositionen (WP1 - WP8) um eine festgelegte Behälter-Achse (BA) in die fotosensitive Substanz (410) abgebildet werden, wobei die Abstrahlrichtung (X) der zumindest einen Projektionsvorrichtung (300) in einer Winkelposition (WP1 - WP8) der Projektionsrichtung (PR1 - PR8) des in der Winkelposition (WP1 - WP8) abgebildeten Projektions-Bildes (200) des Vorlagen-Objekts (100) entspricht,
c) Herausnahme des ausgehärteten herzustellenden dreidimensionalen Objekts (50) aus dem Behälter (400),
**dadurch gekennzeichnet, dass**
in Schritt b) wenn in einer Winkelposition (WP1 - WP8) die Ausdehnung des herzustellenden dreidimensionalen Objekts (50) entlang der Abstrahlrichtung (X) der zumindest einen Projektionsvorrichtung (300) in dieser Winkelposition (WP1 - WP8) zumindest um das doppelte größer ist als der festgelegte Schärfentiefenbereich (ST), die Brennebene (F) derart relativ zum Behälter (400) verschoben wird, sodass zumindest die Hälfte der Ausdehnung des herzustellenden dreidimensionalen Objekts (50) entlang der jeweiligen Abstrahlrichtung (X) in der jeweiligen Winkelposition (WP1 - WP8) durch den Schärfentiefenbereich (ST) abgedeckt wird.

2. Verfahren nach Anspruch 1, **dadurch gekennzeichnet, dass** die lichtsensitive Substanz (410) ein lichtsensitives Harz ist, beispielsweise aus einem Fotopolymer und einem Fotoinitiator.

3. Verfahren nach Anspruch 1 oder 2, **dadurch gekennzeichnet, dass** genau eine Projektionsvorrichtung (300) in Schritt a) bereitgestellt wird.

4. Verfahren nach einem der Ansprüche 1 bis 3, **dadurch gekennzeichnet, dass** zum Abbilden der Projektions-Bilder (200) durch die zumindest eine Projektionsvorrichtung (300) in den jeweiligen Winkelpositionen (WP1 - WP8) der Behälter (400) um die Behälter-Achse (BA) gedreht wird.

5. Verfahren nach einem der Ansprüche 1 bis 4, **dadurch gekennzeichnet, dass** zum Abbilden der Projektions-Bilder (200) durch die zumindest eine Projektionsvorrichtung (300) in den jeweiligen Winkelpositionen (WP1 - WP8) die zumindest eine Projektionsvorrichtung (300) um die Behälter-Achse (BA) gedreht wird.

6. Verfahren nach einem der Ansprüche 1 bis 5, **dadurch gekennzeichnet, dass** das Verschieben der Brennebene (F) in den jeweiligen Winkelpositionen (WP1 - WP8) durch Bewegen des Behälters (400) relativ zu der zumindest einen Projektionsvorrichtung (300) erfolgt, insbesondere linear bewegt wird entlang der Abstrahlrichtung (X) der zumindest einen Projektionsvorrichtung (300).

7. Verfahren nach einem der Ansprüche 1 bis 6, **dadurch gekennzeichnet, dass** das Verschieben der Brennebene (F) in den jeweiligen Winkelpositionen (WP1 - WP8) durch Bewegen der zumindest einen Projektionsvorrichtung (300) relativ zu dem Behälter (400) erfolgt, insbesondere linear bewegt wird entlang der Abstrahlrichtung (X) der zumindest einen Projektionsvorrichtung (300).

8. Verfahren nach einem der Ansprüche 1 bis 7, **dadurch gekennzeichnet, dass** das Verschieben der Brennebene (F) in den jeweiligen Winkelpositionen (WP1 - WP8) durch Verstellen eines Fokus bzw. einer Brennweite der zumindest einen Projektionsvorrichtung (300) erfolgt.

9. Verfahren nach einem der Ansprüche 1 bis 8, **dadurch gekennzeichnet, dass** die unterschiedlichen Winkelpositionen (WP1 - WP8), in welchen die Projektions-Bilder (200) abgebildet werden, zueinander von 0,5° bis 5° beabstandet sind.

10. Verfahren nach einem der Ansprüche 1 bis 9, **dadurch gekennzeichnet, dass** die Projektionsrichtungen (PR1 - PR8) der Projektions-Bilder (200) um die festgelegte Objekt-Achse (OA) in definierten gleichen Abständen zueinander verlaufen, vorzugsweise in Abständen von 0,5° bis 5°, insbesondere 0,5°.

11. Verfahren nach einem der Ansprüche 1 bis 10, **dadurch gekennzeichnet, dass** in Schritt b) das Abbilden der Projektions-Bilder (200) in den unterschiedlichen Projektionsrichtungen (PR1 - PR8) in den Behälter (400) kontinuierlich oder schrittweise abläuft.

## Claims

1. Volumetric 3D printing method for producing a three-dimensional object (50) based on a three-dimensional template object (100) that is formed from a virtual object material, the process comprising the following steps:
a) providing
at least one memory, wherein at least one projection image (200) of the template object (100) is stored in the at least one memory, wherein the projection images (200) are two-dimensional light distributions consisting of pixels, for example in rows and columns, *said* projection images (200) being projections of the template object (100) in different projection directions (PR1 - PR8) around a fixed object axis (OA), wherein the projection directions (PR1 - PR8) of the projection images (200) extend orthogonally to the fixed object axis (OA),
wherein the brightness of a pixel of a projection image (200) corresponds to the summed virtual object material of the template object (100) starting from the pixel, along the projection direction (PR1-PR8) of the corresponding projection image (200) in such a way that the brightness of a pixel is proportional to its summed virtual object material,
at least one projection device (300) that is set up to project the projection images (200) of the template object (100) in the direction of a radiation direction (X) of the at least one projection device (300) in front of the at least one projection device (300) in a defined depth of field range (ST) around a focal plane (F) and
- a container (400) which contains a photosensitive substance (410), wherein the photosensitive substance (410) is arranged to harden in areas in which a light intensity threshold value is exceeded,
b) imaging the projection images (200) by means of the at least one projection device (300) into the photosensitive substance (410) located in the container (400), so that the light intensity threshold of the photosensitive substance is exceeded in the areas corresponding to the three-dimensional object to be produced, wherein the individual projection images (200) ) are each imaged in the photosensitive substance (410) in different angular positions (WP1 - WP8) about a fixed container axis (BA), wherein the radiation direction (X) of the at least one projection device (300) in an angular position (WP1 - WP8) corresponds to the projection direction (PR1 - PR8) of the projection image (200) of the template object (100) imaged in the angular position (WP1 - WP8) projection image (200) of the template object (100) imaged in the angular position (WP1 - WP8),
c) removal of the cured three-dimensional object (50) to be produced from the container (400),
**characterised in that**
in step b), if, in an angular position (WP1 - WP8), the extent of the three-dimensional object (50) to be produced along the direction of radiation (X) of the at least one projection device (300) in this angular position (WP1 - WP8) is at least twice as great as the defined depth of field range (ST), the focal plane (F) is displaced relative to the container (400) so that at least half of the extent of the three-dimensional object (50) to be produced along the respective radiation direction (X) in the respective angular position (WP1 - WP8) is covered by the depth of field range (ST).

2. Method according to claim 1, **characterised in that** the photosensitive substance (410) is a light-sensitive resin, for example of a photopolymer and a photoinitiator.

3. Method according to claim 1 or 2, **characterised in that** exactly one projection device (300) is provided in step a).

4. Method according to one of claims 1 to 3, **characterised in that** the container (400) is rotated about the container axis (BA) in order to image the projection images (200) by means of the at least one projection device (300) in the respective angular positions (WP1 - WP8).

5. Method according to one of claims 1 to 4, **characterised in that**, to form the projection images (200) by means of the at least one projection device (300) in the respective angular positions (WP1 - WP8), the at least one projection device (300) is rotated about the container axis (BA).

6. Method according to one of claims 1 to 5, **characterised in that** the displacement of the focal plane (F) in the respective angular positions (WP1 - WP8) is effected by moving the container (400) relative to the at least one projection device (300), in particular by moving it linearly along the radiation direction (X) of the at least one projection device (300).

7. Method according to one of claims 1 to 6, **characterised in that** the displacement of the focal plane (F) in the respective angular positions (WP1 - WP8) is effected by moving the at least one projection device (300) relative to the container (400), in particular by moving it linearly along the radiation direction (X) of the at least one projection device (300).

8. Method according to one of the claims 1 to 7, **characterised in that** the displacement of the focal plane (F) in the respective angular positions (WP1 - WP8) is effected by adjusting a focus or a focal length of the at least one projection device (300).

9. Method according to one of the claims 1 to 8, **characterised in that** the different angular positions (WP1 - WP8) in which the projection images (200) are formed are spaced apart from one another by 0.5° to 5°.

10. Method according to one of the claims 1 to 9, **characterised in that** the projection directions (PR1 - PR8) of the projection images (200) extend around the fixed object axis (OA) at defined equal distances from one another, preferably at distances of 0.5° to 5°, in particular 0.5°.

11. Method according to one of the claims 1 to 10, **characterised in that** in step b) the imaging of the projection images (200) in the different projection directions (PR1 - PR8) into the container (400) proceeds continuously or stepwise.

## Revendications

1. Procédé d'impression 3D volumétrique pour la fabrication d'un objet tridimensionnel (50) à partir d'un objet modèle tridimensionnel (100) formé d'un matériau objet virtuel, le procédé comprenant les étapes suivantes :
a) fournir une mémoire
- d'au moins une mémoire, ladite au moins une mémoire stockant des images de projection (200) de l'objet modèle (100), lesdites images de projection (200) étant des distributions de lumière bidimensionnelles de pixels, par exemple en lignes et en colonnes, lesquelles images de projection (200) correspondent à des projections de l'objet modèle (100) dans des directions de projection (PR1 - PR8) respectivement différentes autour d'un axe d'objet (OA) fixé, les directions de projection (PR1 - PR8) des images de projection (200) étant orthogonales à l'axe d'objet (OA) fixé,
dans lequel la luminosité d'un pixel d'une image de projection (200) correspond au matériau d'objet virtuel cumulé de l'objet modèle (100), en partant du pixel, le long de la direction de projection (PR1 - PR8) de l'image de projection (200) correspondante, de telle sorte que la luminosité d'un pixel est proportionnelle à son matériau d'objet virtuel cumulé,
- d'au moins un dispositif de projection (300) qui est conçu pour reproduire avec netteté les images de projection (200) de l'objet modèle (100) dans la direction d'une direction de rayonnement (X) du au moins un dispositif de projection (300) devant le au moins un dispositif de projection (300) dans une plage de profondeur de champ (ST) définie autour d'un plan focal (F), et
- d'un récipient (400) contenant une substance photosensible (410), la substance photosensible (410) étant adaptée pour durcir dans des zones dans lesquelles une valeur seuil d'intensité lumineuse est dépassée,
b) reproduction des images de projection (200) au moyen du au moins un dispositif de projection (300) dans la substance photosensible (410) se trouvant dans le récipient (400), de sorte que la valeur seuil d'intensité lumineuse de la substance photosensible est dépassée dans les zones qui correspondent à l'objet tridimensionnel à fabriquer, les différentes images de projection (200) étant reproduites dans la substance photosensible (410) respectivement dans différentes positions angulaires (WP1 - WP8) autour d'un axe de récipient (BA) déterminé, la direction de rayonnement (X) du au moins un dispositif de projection (300) dans une position angulaire (WP1 - WP8) correspondant à la direction de projection (PR1 - PR8) de l'image de projection (200) de l'objet modèle (100) reproduite dans la position angulaire (WP1 - WP8),
c) retrait de l'objet tridimensionnel (50) durci à fabriquer du récipient (400),
**caractérisé en ce que**
à l'étape b), si dans une position angulaire (WP1 - WP8), l'extension de l'objet tridimensionnel (50) à fabriquer le long de la direction de rayonnement (X) du au moins un dispositif de projection (300) dans cette position angulaire (WP1 - WP8) est au moins deux fois plus grande que la plage de profondeur de champ (ST) fixée, le plan focal (F) est déplacé par rapport au récipient (400) de telle sorte qu'au moins la moitié de l'étendue de l'objet tridimensionnel (50) à fabriquer le long de la direction de rayonnement respective (X) dans la position angulaire respective (WP1 - WP8) est couverte par la plage de profondeur de champ (ST).

2. Procédé selon la revendication 1, **caractérisé en ce que** la substance photosensible (410) est une résine photosensible, par exemple composée d'un photopolymère et d'un photoinitiateur.

3. Procédé selon la revendication 1 ou 2, **caractérisé en ce que** exactement un dispositif de projection (300) est fourni à l'étape a).

4. Procédé selon l'une des revendications 1 à 3, **caractérisé en ce que**, pour représenter les images de projection (200) par le au moins un dispositif de projection (300) dans les positions angulaires respectives (WP1 - WP8), on fait tourner le récipient (400) autour de l'axe (BA) du récipient.

5. Procédé selon l'une des revendications 1 à 4, **caractérisé en ce que**, pour représenter les images de projection (200) par ledit au moins un dispositif de projection (300) dans les positions angulaires respectives (WP1 - WP8), on fait tourner ledit au moins un dispositif de projection (300) autour de l'axe du récipient (BA).

6. Procédé selon l'une des revendications 1 à 5, **caractérisé en ce que** le déplacement du plan focal (F) dans les positions angulaires respectives (WP1 - WP8) s'effectue en déplaçant le récipient (400) par rapport à l'au moins un dispositif de projection (300), en particulier en le déplaçant de manière linéaire le long de la direction de rayonnement (X) de l'au moins un dispositif de projection (300).

7. Procédé selon l'une des revendications 1 à 6, **caractérisé en ce que** le déplacement du plan focal (F) dans les positions angulaires respectives (WP1 - WP8) s'effectue en déplaçant ledit au moins un dispositif de projection (300) par rapport au récipient (400), notamment en le déplaçant linéairement le long de la direction de rayonnement (X) dudit au moins un dispositif de projection (300).

8. Procédé selon l'une des revendications 1 à 7, **caractérisé en ce que** le déplacement du plan focal (F) dans les positions angulaires respectives (WP1 - WP8) s'effectue par réglage d'un foyer ou d'une distance focale de l'au moins un dispositif de projection (300).

9. Procédé selon l'une des revendications 1 à 8, **caractérisé en ce que** les différentes positions angulaires (WP1 - WP8), dans lesquelles les images de projection (200) sont reproduites, sont espacées les unes des autres de 0,5° à 5°.

10. Procédé selon l'une des revendications 1 à 9, **caractérisé en ce que** les directions de projection (PR1 - PR8) des images de projection (200) s'étendent autour de l'axe d'objet défini (OA) à des distances égales définies les unes par rapport aux autres, de préférence à des distances de 0,5° à 5°, en particulier de 0,5°.

11. Procédé selon l'une des revendications 1 à 10, **caractérisé en ce que**, à l'étape b), la reproduction des images de projection (200) dans les différentes directions de projection (PR1 - PR8) dans le récipient (400) se déroule en continu ou par étapes.
